(19) Europäisches Patentamt
European Patent Office
Office européen des brevets

(11) **EP 2 065 695 B1**

(12) **FASCICULE DE BREVET EUROPEEN**

(45) Date de publication et mention de la délivrance du brevet:
**15.07.2015 Bulletin 2015/29**

(51) Int Cl.:
***G01N 3/42*** *(2006.01)*

(21) Numéro de dépôt: **07121669.1**

(22) Date de dépôt: **27.11.2007**

(54) **Procédé d'analyse d'un test de rayure**

Verfahren zur Analyse eines Kratztests

Method for analysing a scratching test

(84) Etats contractants désignés:
**AT BE BG CH CY CZ DE DK EE ES FI FR GB GR HU IE IS IT LI LT LU LV MC MT NL PL PT RO SE SI SK TR**

(43) Date de publication de la demande:
**03.06.2009 Bulletin 2009/23**

(73) Titulaire: **Anton Paar TriTec SA**
**2034 Peseux (CH)**

(72) Inventeurs:
• **Bellaton, Bertrand**
**2000, Neuchâtel (CH)**
• **Coudert, Pierre-Jean**
**69126, Brindas (FR)**

(74) Mandataire: **GLN SA**
**Avenue Edouard-Dubois 20**
**2000 Neuchâtel (CH)**

(56) Documents cités:
**US-A1- 2002 104 371**

• **VON STEBUT J ET AL: "Acoustic emission monitoring of single cracking events and associated damage mechanism analysis in indentation and scratch testing" SURF COAT TECHNOL; SURFACE AND COATINGS TECHNOLOGY 1999 ELSEVIER SEQUOIA SA, LAUSANNE, SWITZERLAND, vol. 116, 14 septembre 1998 (1998-09-14), pages 160-171, XP002480058**
• **VON STEBUT J: "Multi-mode scratch testing - A European standards, measurements and testing study" SURF. COAT. TECHNOL.; SURFACE AND COATINGS TECHNOLOGY OCT 1 2005, vol. 200, no. 1-4 SPEC. ISS., 1 octobre 2005 (2005-10-01), pages 346-350, XP005063527**
• **STALLARD J ET AL: "The study of the adhesion of a TiN coating on steel and titanium alloy substrates using a multi-mode scratch tester" TRIBOL INT; TRIBOLOGY INTERNATIONAL; 180 YEARS OF SCRATCH TESTING FEBRUARY 2006, vol. 39, no. 2, février 2006 (2006-02), pages 159-166, XP005170306**

EP 2 065 695 B1

**Description**

Domaine technique

La présente invention se rapporte au domaine du dépôt de couches sur un substrat. Elle concerne un procédé d'analyse d'une rayure effectuée dans le cadre d'un test de rayure.

Etat de la technique

Lorsqu'un (ou plusieurs) revêtement (coating) est déposé sur un substrat (bulk), il est fondamental de pouvoir évaluer son adhésion au substrat, sa cohésion, ainsi que les caractéristiques élasto-plastique de la combinaison revêtement/substrat. On utilise de manière très courante, un test connu sous le nom de test de rayure (appelé scratch test, en anglais) est un bon moyen d'évaluation de ces propriétés.

Le principe du test de rayure est d'effectuer à l'aide d'un indenteur comprenant une pointe calibrée, par exemple un Rockwell C 200$\mu$m, la pointe étant en diamant ou en un autre matériau dur du même type, une rayure sous force et vitesse contrôlée avec enregistrement des paramètres de la mesure. Les paramètres les plus couramment mesurés sont la force normale, la force tangentielle, la profondeur de pénétration, l'émission acoustique.... Le fait de contrôler précisément la force et la vitesse de la rayure permet une évaluation reproductible et fiable de la qualité du dépôt du revêtement. Cette méthode est largement utilisée et fait l'objet de plusieurs normes (ISO, IEN, ASTM...).

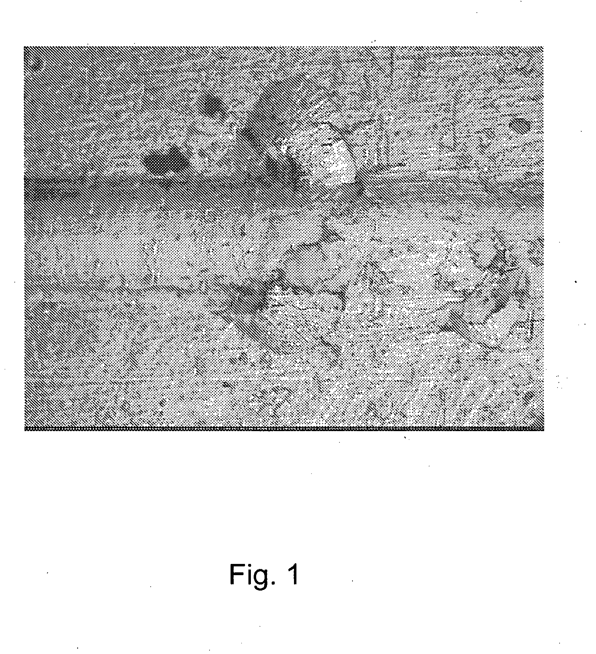

Une fois la rayure réalisée, la détermination des propriétés d'adhésion et de cohésion du revêtement s'effectue par inspection sous microscope de la rayure et par la définition des charges critiques, c'est-à-dire de la force appliquée, correspondants à des événements se produisant au niveau du revêtement et clairement identifiés visuellement. A titre d'exemple, la figure 1 représente un écaillement subi par un revêtement, définissant une fragilité qui se manifeste à une charge critique donnée.

Le processus d'un test de rayure selon l'état de la technique s'effectue comme suit :

- visée sous microscope ou à l'aveugle de la zone de départ de la rayure,
- réalisation de la rayure par l'indenteur,
- retour synchronisé sous le microscope pour une inspection visuelle de la rayure et pour la détermination des charges critiques, et
- passage à la mesure suivante.

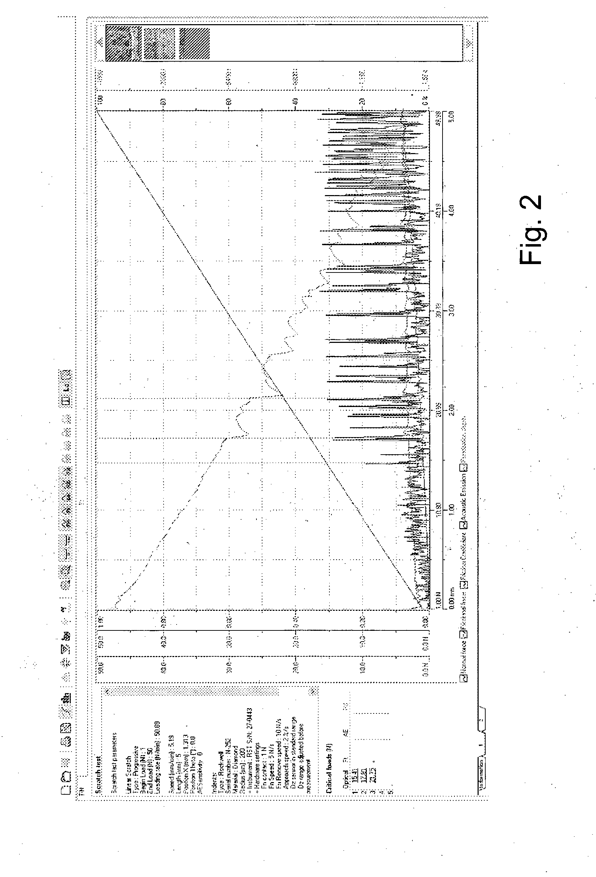

Eventuellement, un enregistrement des images correspondant aux charges critiques auxquelles un événement particulier est détecté, est effectué. La figure 2 montre une capture d'écran illustrant l'analyse d'une rayure acquise selon la méthode ci-dessus. On peut voir des courbes de plusieurs paramètres en fonction du déplacement de l'indenteur. Sur un deuxième écran, on affiche en général quelques images de la rayure, comme celle de la figure 1, par exemple. Tant que la rayure est vue sous le microscope, il est possible d'avoir une synchronisation entre les courbes et les images et ainsi de pouvoir faire correspondre une image donnée à une abscisse de la courbe. En revanche, lorsque la rayure n'est plus sous le microscope, seules quelques images de la rayure enregistrées lors de sa réalisation sont disponibles dans les bases de données. Il est alors impossible, pour une analyse a posteriori, de pouvoir associer avec certitude une de ces images avec la force appliquée correspondante.

On réalise aisément que la limite de ce mode de fonctionnement est que la détermination des charges critiques se fait juste après la mesure et ce, de façon définitive, car il n'est pas possible de revenir à l'inspection visuelle après avoir bougé ou changé l'échantillon, la synchronisation physique entre l'image de la rayure et la force appliquée en correspondance avec une image donnée, étant perdue.

Par exemple, le document J. von Stebut et al. "Acoustic emission monitoring of single cracking events and associated damage mechanism analysis in indentation and scratch testing", Surface and Coatings Technology 116-119 (1999) pages 160-171, décrit un procédé d'analyse d'une rayure d'un test de rayure mettant en oeuvre un appareil numérique d'acquisition d'images, un substrat et un indenteur pour appliquer une force sur le substrat ; le procédé comprend une étapes de détermination de la position du début de la rayure par rapport à une position de référence et une étape de réalisation de la rayure sur le substrat au moyen de l'indenteur en enregistrant la force appliquée et au moins un paramètre de mesure, en fonction du déplacement de l'indenteur sur le substrat par rapport à la position de référence.

Le but de la présente invention est de proposer une méthode permettant une analyse facilitée des rayures, particulièrement en offrant la possibilité d'analyser les images à un moment quelconque par rapport au moment où les rayures sont effectuées. Divulgation de l'invention

L'objet de l'invention est de proposer un procédé pour enregistrer, calibrer et exploiter une image panoramique, sans perte de résolution, représentant la totalité ou une partie importante et significative de la rayure. De manière particulièrement avantageuse, l'image panoramique peut être affichée de façon synchronisée avec les paramètres de la rayure, pour analyser visuellement cette rayure, toujours sans perte de résolution, même lorsque celle-ci n'est plus présente sous le microscope. Ainsi est résolu le problème de l'irréversibilité des attributions des charges Critiques Optiques.

Plus particulièrement, l'invention concerne un procédé tel que défini dans les revendications. Brève description des dessins

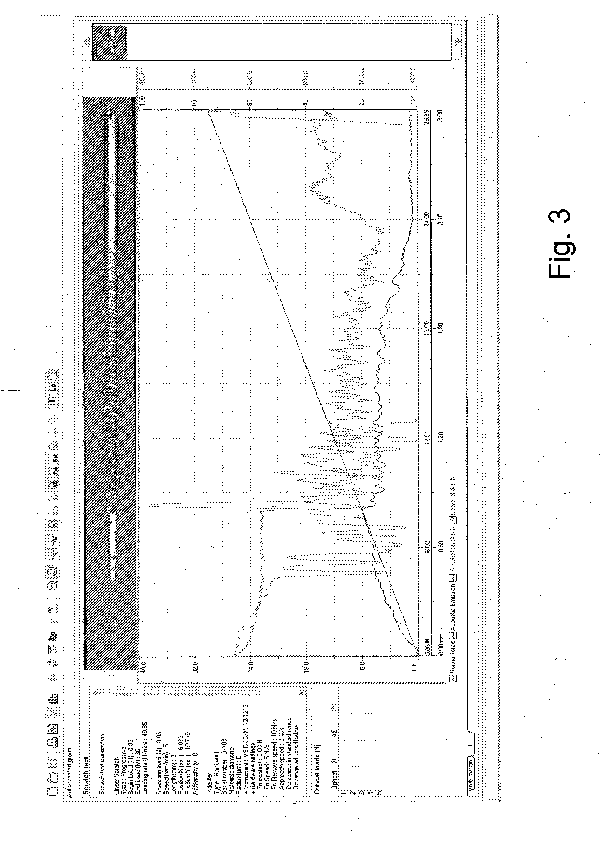

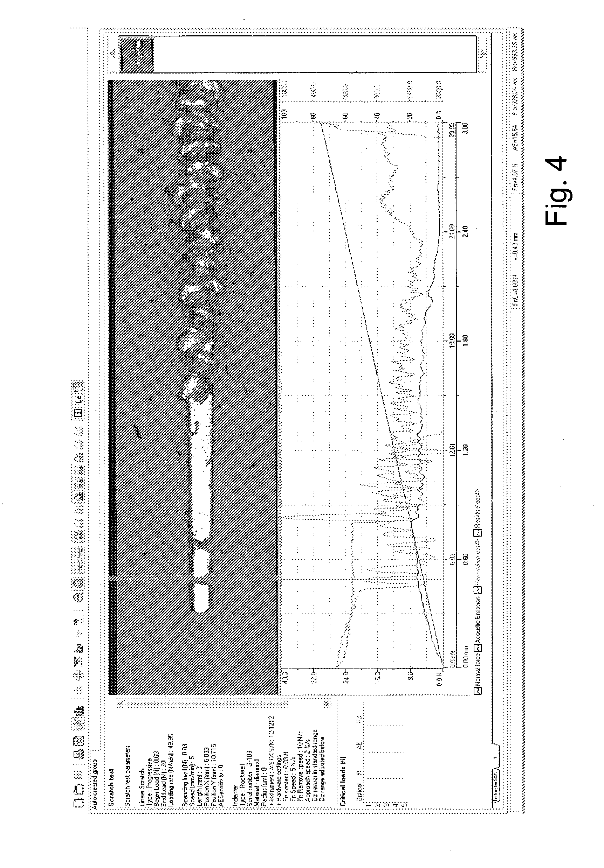

Les figures 1 et 2 ont déjà été présentées ci-dessus et se rapportent à l'état de la technique. La description de la présente invention qui va suivre est faite en référence au dessin annexé, dans lequel les figures 3 et 4 sont des captures d'écran illustrant le résultat auquel le procédé selon l'invention permet d'aboutir. Mode(s) de réalisation de l'invention

Pour la mise en oeuvre de l'invention, on se dote d'un dispositif utilisé de manière habituelle pour effectuer des tests de rayure et qui ne sera donc pas décrit en détails. Le dispositif comprend notamment :

- un appareil numérique d'acquisition d'images, muni d'au moins un objectif capable d'acquérir des images fortement grossies, c'est-à-dire avec des grossissements de type microscope,
- un support pour recevoir un substrat à tester et sur lequel les rayures vont être réalisées, et
- un indenteur pour appliquer une force contrôlée sur le substrat, de manière à effectuer la rayure.

L'appareil numérique et l'indenteur sont susceptibles d'être déplacés relativement au substrat. Pour ce faire, le substrat est généralement disposé sur une table mobile, pouvant être déplacée avec une grande précision. Il est possible de déplacer l'indenteur et l'appareil numérique.

Divers capteurs sont également disposés afin d'effectuer l'analyse de la rayure et de détecter des paramètres tels que la force normale, la force tangentielle, la profondeur de pénétration, l'émission acoustique....

Un ordinateur est relié à ces différents éléments et met en oeuvre un programme capable de les commander, de recevoir et de traiter les données fournies par les capteurs et d'afficher sur un écran les informations pertinentes pour une analyse de la rayure.

Pour parvenir au but poursuivi par l'invention, l'un des aspects fondamentaux du procédé d'analyse de la rayure réside dans la synchronisation d'une image, dite image panorama, de l'ensemble de la rayure, ou au moins de sa partie significative, avec des courbes des paramètres de mesure en fonction du déplacement de l'indenteur. Plus précisément, comme le montrent les figures 3 et 4, la synchronisation permet de mettre en correspondance une portion de l'image de la rayure avec une abscisse des courbes. L'abscisse des courbes représente la distance parcourue par l'indenteur. Grâce à cette synchronisation, il est possible d'associer une force appliquée au substrat, avec les différents paramètres de mesures et avec la portion de l'image panorama correspondante.

Dans l'état de la technique, cette synchronisation est faite par l'opérateur qui analyse les courbes et qui associe visuellement un événement identifié sur les courbes avec une partie de la rayure qu'il visualise au microscope. Selon l'invention, les paramètres de la rayure, d'une part, et l'image panorama de la rayure, d'autre part, sont enregistrés et peuvent être affichés n'importe quand, en conservant la synchronisation.

Nous allons maintenant détailler les étapes d'un procédé selon l'invention, en référence à un dispositif dans lequel le substrat est disposé sur une table mobile.

Dans un premier temps, particulièrement pour obtenir la synchronisation recherchée, différentes calibrations sont effectuées. Ainsi, la distance entre l'indenteur et l'appareil d'acquisition d'images est calibrée afin de connaître leur position respective, pour une position donnée de la table mobile. On procède également à une calibration de l'appareil numérique d'acquisition d'images, au cours de laquelle on détermine la taille d'un pixel. Autrement dit, on établit une correspondance entre un pixel de l'appareil numérique et la dimension réelle du point qu'il représente, au niveau du substrat. On détermine également le champ de l'appareil, ce qui permet de connaître la longueur réelle d'une portion de rayure située sur une seule image. On rappellera que le champ est l'espace (ou la surface, dans un plan) que l'appareil peut capter. On appelle profondeur de champ la distance entre le point le plus proche et le point le plus éloigné, où l'image a une encore une netteté suffisante.

Avant de procéder à la réalisation de la rayure, on déplace le substrat sous l'appareil d'acquisition d'images, de manière à ce que la position $P0$ correspondant au début de la rayure soit visée par l'objectif. Dans cet exemple, c'est cette position $P0$ qui sert de référence. On effectue le réglage de la mise au point de l'objectif, manuellement ou automatiquement, afin d'avoir une image nette. On détermine ainsi la distance initiale optimale $d0$ entre le substrat et l'objectif, permettant en $P0$ d'avoir une image de qualité optimale.

On effectue ensuite une étape de mesure et d'enregistrement de l'altitude $hi$ du substrat, dans la zone où va être réalisée la rayure. Cette étape est effectuée en faisant se déplacer cette zone devant l'indenteur, à charge très faible, non destructrice. On obtient la topographie du substrat, par rapport à la position de référence $P0$, avant la réalisation de la rayure.

Le substrat est ensuite déplacé de manière à ce que la position $P0$ déterminée comme étant le début de la rayure, soit positionnée sous l'indenteur. La rayure est ensuite réalisée, sur une longueur déterminée, en appliquant une force variant de manière également déterminée. Les paramètres de la rayure sont mesurés grâce aux capteurs et sont enregistrés.

L'image de la rayure est ensuite acquise par l'appareil numérique. On notera que, selon le positionnement respectif de l'indenteur et de l'appareil d'acquisition d'images, cette opération pourrait se faire de manière quasi-simultanée avec la réalisation de la rayure.

La position $P0$ de la rayure est amenée dans la visée de l'objectif de l'appareil. Ce dernier effectue et enregistre une image, de la meilleure qualité possible. Puis, tant que la fin de la rayure n'est pas atteinte, le substrat est déplacé d'une distance représentant une fraction du champ de l'objectif. Cela permet ainsi de collecter des images de l'ensemble de la rayure, sans qu'aucune partie de cette dernière n'ait pas été numérisée. Typiquement, entre deux images consécutives, le substrat est déplacé d'une distance correspondant à un demi-champ.

Pour acquérir une image de qualité optimale, la topographie du substrat déterminée précédemment est utilisée pour régler la position du substrat par rapport à l'objectif, lors de l'acquisition des images. Plus particulièrement, le substrat est placé, selon l'axe vertical de la table, à une distance d de l'objectif, $\underline{d}$ étant défini comme suit :

$$d = d0 + hi + pi$$

où

$\underline{d0}$ est la distance initiale optimale entre le substrat et l'objectif déterminée précédemment,

$\underline{hi}$ est l'altitude du substrat en une position donnée, déterminée ci-dessus,

$\underline{pi}$ est la profondeur de la rayure en une position donnée, définie par la position de l'indenteur dans l'axe vertical.

De manière avantageuse, toujours dans le but d'obtenir des images de qualité optimale, pour une position donnée de la rayure, l'appareil d'acquisition d'image est commandé pour prendre une série d'images, à des distances variables entre le substrat et l'objectif. Tant que d < d0 + hi, l'appareil acquiert des images, la distance entre le substrat et l'objectif variant entre deux prises de vue, selon un pas déterminé en fonction de la profondeur de champ de l'appareil. Typiquement, le pas est d'une demi-profondeur de champ. Ensuite, pour une position donnée en référence à la rayure, chaque image enregistrée à différente distance du substrat subit un traitement d'optimisation, au cours duquel on calcule une image de netteté du plan de luminance par DCT (de l'anglais Discrete cosine transform) locale et par gradient local. On peut ainsi construire une cartographie d'altitude en choisissant, pour chaque pixel, l'altitude de l'image de netteté où il a une valeur maximum. Après un filtrage médian de la cartographie d'altitude, il est possible de reconstruire l'image finale.

La partie centrale de chaque image ainsi optimisée est ensuite repositionnée par inter-corrélation avec la partie centrale de l'image précédente. Ce calcul permet d'affiner la calibration de la taille du pixel. Une à une, les images enregistrées ainsi obtenues s'ajoutent et forment l'image panorama de toute la rayure ou au moins de sa partie significative. Pour chaque image constituant l'image panorama, ses paramètres de calibration et sa position par rapport à la position de référence $\underline{P0}$, sont mémorisées.

Ainsi, l'image panorama est reconstituée à partir d'une succession d'images, chacune d'elles étant associée à une distance par rapport à la position de référence. L'association image/distance peut être mémorisée, ce qui permet ensuite de pouvoir afficher l'image panorama de manière synchronisée avec les autres courbes, indépendamment de la présence physique du substrat.

Au niveau de l'affichage de l'image panorama et des autres courbes des paramètres de la rayure, on peut prévoir, comme illustré sur la figure 3, de disposer sur un même écran une vue de l'ensemble de l'image panorama et une vue des courbes. Un curseur permet d'indiquer précisément la correspondance entre la position sur l'image panorama et l'abscisse des courbes associée à cette image. Pour une meilleure visibilité, on peut également prévoir, comme illustré sur la figure 4, que l'image panorama est agrandie. Grâce à la calibration effectuée, cet agrandissement peut se faire simplement, sans perte de la synchronisation.

Il est ainsi facile et confortable d'analyser visuellement les charges critiques à partir de l'image panorama, en correspondance avec les courbes des paramètres.

On notera qu'il est encore possible, pour une même mesure, d'associer plusieurs panoramas avec différents grossissements.

Ainsi est proposé un procédé d'analyse d'une rayure d'un test de rayure, permettant d'associer dans un même fichier les courbes et la vue panoramique de la trace de la rayure de façon calibrée et synchronisée, il n'y a plus de limite à l'exploitation (différée ou non) des tests de rayure. On peut ainsi envisager d'effectuer des tests de contrôle qualité automatisés, pour des revêtements déposés sur des substrats.

## Revendications

1. Procédé d'analyse d'une rayure d'un test de rayure, mettant en oeuvre un appareil numérique d'acquisition d'images doté d'un objectif à fort grossissement destiné à ne capter qu'une partie de la rayure, un substrat et un indenteur pour appliquer une force sur le substrat,
ledit procédé comprenant les étapes suivantes :

- détermination de la position du début de la rayure par rapport à une position de référence,
- réalisation de la rayure sur le substrat au moyen de l'indenteur en enregistrant la force appliquée et au moins un paramètre de mesure, en fonction du déplacement de l'indenteur sur le substrat par rapport à la position de référence, ensuite,
- après la réalisation de la rayure, acquisition et enregistrement d'une série d'images de toute la partie significative de la rayure, chaque image de la série correspondant à un grossissement d'une partie de la rayure, la position sur la rayure de chaque image enregistrée étant déterminée par rapport à la position de référence,
- synchronisation des images enregistrées, de la force appliquée et du paramètre de mesure, en fonction du déplacement de l'indenteur,
- affichage des courbes de la force appliquée et du paramètre de mesure en fonction du déplacement de l'indenteur, et affichage de manière synchronisée avec la force appliquée et avec le paramètre de mesure, d'une image panorama de la partie significative de la rayure, reconstituée à partir des images enregistrées.

2. Procédé selon la revendication 1, **caractérisé en ce qu'**il débute par une étape de calibration comprenant une étape de détermination de la taille d'un pixel, permettant d'établir une correspondance entre un pixel de l'appareil numérique d'acquisition d'images et sa dimension réelle correspondante, au niveau du substrat.

3. Procédé selon la revendication 2, **caractérisé en ce que** l'étape de calibration comprend également une étape de détermination du champ de l'appareil d'acquisition d'images.

4. Procédé selon l'une des revendications précédentes, **caractérisé en ce qu'**il comprend, consécutivement à l'étape de détermination de la position du début de la rayure et avant la réalisation de la rayure, une étape de mesure et d'enregistrement de l'altitude du substrat, réalisée en faisant se déplacer l'appareil d'acquisition d'image en référence à la zone du substrat où va être réalisée la rayure.

5. Procédé selon la revendication précédente, **caractérisé en ce que** l'altitude du substrat enregistrée est utilisée lors de l'étape d'acquisition des images de la rayure pour optimiser le réglage de l'appareil d'acquisition d'image.

6. Procédé selon la revendication 5 dans lequel l'appareil d'acquisition comprend un objectif, **caractérisé en ce que**, lors de l'étape d'acquisition et d'enregistrement d'images, le substrat est placé à une distance d de l'objectif, d étant défini comme suit :

$$d = d0 + hi + pi$$

où
d0 est la distance initiale optimale entre le substrat et l'objectif,
hi est l'altitude du substrat en une position donnée,
pi est la profondeur de la rayure en une position donnée, définie par la position verticale de l'indenteur.

7. Procédé selon la revendication 6, **caractérisé en ce que**, pour une position donnée de la rayure, ledit appareil est commandé pour prendre une série d'images, à des distances variables entre le substrat et l'objectif, tant que d > d0 + hi, les images de la série étant traitées de manière à reconstruire une image finale de la rayure à ladite position donnée.

8. Procédé selon l'une des revendications 3 à 7, **caractérisé en ce que** après chaque prise d'image, l'objectif et la rayure sont déplacés l'un en référence à l'autre, d'une fraction du champ dudit appareil d'acquisition d'images, deux images consécutives étant positionnées l'une en référence à l'autre par intercorrélation.

9. Procédé selon l'une des revendications précédentes, **caractérisé en ce que** la position de référence est le début de la rayure.

10. Procédé selon l'une des revendications 2 à 9, dans lequel l'appareil d'acquisition d'images comprend plusieurs objectifs, l'étape de calibration étant appliquée à chacun des objectifs.

**Patentansprüche**

1. Verfahren zur Analyse eines Kratztestskratzers, das ein digitales Bildaufnahmegerät, das mit einem Objektiv mit starker Vergrößerung ausgestattet ist, das dazu bestimmt ist, nur einen Abschnitt des Kratzers aufzunehmen, ein Substrat und einen Indentierer, um eine Kraft auf das Substrat auszuüben, verwendet,
wobei das Verfahren die folgenden Schritte umfasst:

- Bestimmen der Anfangsposition des Kratzers in Bezug auf eine Referenzposition,
- Herstellen des Kratzers auf dem Substrat mit dem Indentierer bei Aufzeichnung der angewendeten Kraft und mindestens eines Messparameters in Abhängigkeit von der Verlagerung des Indentierers auf dem Substrat in Bezug auf die Referenzposition, danach,
- nach Herstellung des Kratzers, Aufnehmen und Aufzeichnen einer Serie von Bildern vom gesamten signifikanten Abschnitt des Kratzers, wobei jedes Bild der Serie einer Vergrößerung eines Abschnitts des Kratzers entspricht, wobei die Position auf dem Kratzer jedes aufgezeichneten Bilds in Bezug auf die Referenzposition bestimmt wird,
- Synchronisieren der aufgezeichneten Bilder, der angewendeten Kraft und des Messparameters in Abhängigkeit von der Verlagerung des Indentierers,
- Anzeigen der Kurven der angewendeten Kraft und des Messparameters in Abhängigkeit von der Verlagerung des Indentierers, und synchronisiertes Anzeigen eines aus aufgezeichneten Bildern des signifikanten Abschnitts des Kratzers wiederhergestellten Panoramabilds mit der angewendeten Kraft und mit dem Messparameter.

2. Verfahren nach Anspruch 1, **dadurch gekennzeichnet, dass** es mit einem einen Bestimmungsschritt der Größe eines Pixels umfassenden Kalibrierschritt beginnt, der erlaubt, eine Entsprechung zwischen einem Pixel des digitalen Bildaufnahmegeräts und seiner entsprechenden tatsächlichen Größe auf Ebene des Substrats herzustellen.

3. Verfahren nach Anspruch 2, **dadurch gekennzeichnet, dass** der Kalibrierschritt ebenfalls einen Bestimmungsschritt des Felds des Bildaufnahmegeräts umfasst.

4. Verfahren nach einem der vorangehenden Ansprüche, **dadurch gekennzeichnet, dass** es nach dem Bestimmungsschritt der Anfangsposition des Kratzers und vor der Herstellung des Kratzers einen Mess- und Aufzeichnungsschritt der Höhe des Substrats umfasst, der durch Verlagern des Bildaufnahmegeräts in Bezug auf die Zone des Substrats durchgeführt wird, in der der Kratzer hergestellt wird.

5. Verfahren nach vorangehendem Anspruch, **dadurch gekennzeichnet, dass** die aufgezeichnete Substrathöhe beim Aufzeichnungsschritt der Bilder des Kratzers zwecks Optimierung der Einstellung des Bildaufnahmegeräts verwendet wird.

6. Verfahren nach Anspruch 5, wobei das Aufnahmegerät ein Objektiv umfasst, **dadurch gekennzeichnet, dass** das Substrat beim Bildaufnahme- und Aufzeichnungsschritt in einem Abstand $\underline{d}$ von Objektiv platziert ist, wobei $\underline{d}$ wie folgt definiert ist:

$$d = d0 + hi + pi$$

wobei
$\underline{d0}$ der optimale Ausgangsabstand zwischen dem Substrat und dem Objektiv ist,
$\underline{hi}$ die Höhe des Substrats an einer bestimmten Stelle ist,
$\underline{pi}$ die Tiefe des Kratzers an einer bestimmten Stelle ist, die von der vertikalen Position des Indentierers bestimmt ist.

7. Verfahren nach Anspruch 6, **dadurch gekennzeichnet, dass** das Gerät für eine bestimmte Stelle des Kratzers gesteuert wird, um in variablen Abständen zwischen dem Substrat und dem Objektiv eine Serie von Bildern aufzunehmen, wobei d < d0 + hi, wobei die Bilder der Serie derart verarbeitet werden, dass ein abschließendes Bild des Kratzers an der bestimmten Stelle wiederhergestellt wird.

8. Verfahren nach einem der Ansprüche 3 bis 7, **dadurch gekennzeichnet, dass** das Objektiv und der Kratzer nach jeder Bildaufnahme um einen Bruchteil des Felds des Bildaufnahmegeräts im Verhältnis zueinander verschoben werden, wobei zwei aufeinanderfolgende Bilder durch Interkorrelation zueinander positioniert sind.

9. Verfahren nach einem der vorangehenden Ansprüche, **dadurch gekennzeichnet, dass** die Referenzposition der Anfang des Kratzers ist.

10. Verfahren nach einem der Ansprüche 2 bis 9, wobei das Bildaufnahmegerät mehrere Objektive umfasst, wobei der Kalibrierschritt auf jedes der Objektive angewendet wird.

## Claims

1. Method for analyzing a scratch from a scratch test, implementing a digital image acquisition device provided with a high magnification objective able to capture only a part of the scratch, a substrate and an indenter for applying a force on the substrate, said method comprising the following steps:

- determining the position of the beginning of the scratch relative to a reference position,
- making the scratch on the substrate by means of the indenter while recording the applied force and at least one measurement parameter, as a function of the displacement of the indenter on the substrate relative to the reference position,
- after making the scratch, acquiring and recording a set of images of the whole of the significant portion of the scratch, each image corresponding to an enlargement of a part of the scratch, the position on the scratch of each recorded images being determined relative to the reference position,
- synchronization of the recorded images, of the applied force and of the measurement parameter, as a function of the displacement of the indenter,
- displaying the curves of the applied force and of the measurement parameter as a function of the displacement of the indenter, and displaying in a synchronized way with the applied force and with the measurement parameter a panoramic image of the significant portion of the scratch, reconstructed from the recorded images.

**2.** Method according to claim 1, **characterized in that** it begins with a calibration step comprising a step for determining the size of a pixel, with which a correspondence between a pixel of the digital image acquisition device and its corresponding actual dimension at the substrate may be established.

**3.** Method according to claim 2, **characterized in that** the calibration step also comprises a step for determining the field of the image acquisition device.

**4.** Method according to any of the preceding claims, **characterized in that** it comprises, consecutively with the step of determining the position of the beginning of the scratch and before making the scratch, a step for measuring and recording the altitude of the substrate carried out by moving the image acquisition device with reference to the area of the substrate where the scratch will be made.

**5.** Method according to the preceding claim, **characterized in that** the recorded altitude of the substrate is used during the step for acquiring images of the scratch in order to optimize the adjustment of the image acquisition device.

**6.** Method according to claim 5 **characterized in that** the acquisition device comprises an objective, **characterized in that** during the step for acquiring and recording images, the substrate is placed at a distance d of the objective, d being defined as follows:

$$d = d0 + hi + pi$$

wherein
d0 is the optimum initial distance between the substrate and the objective,
hi is the altitude of the substrate at a given position,
pi is the depth of the scratch in a given position, defined by the vertical position of the indenter.

**7.** Method according to claim 6, **characterized in that**, for a given position of the scratch, said device is controlled in order to take a series of images, at variable distances between the substrate and the objective, such that d > d0 + hi, the images of the series being processed so as to reconstruct a final image of the scratch at said given position.

**8.** Method according to one of claims 3 to 7, **characterized in that** after each image is taken, the objective and the scratch are displaced with reference to each other, by a fraction of the field of said image acquisition device, two consecutive images being positioned with reference to each other by intercorrelation.

**9.** Method according to one of the preceding claims, **characterized in that** the reference position is the start of the scratch.

**10.** Method according to one of claims 2 to 9, in which the image acquisition device comprises several objectives, the calibration step being applied to each of the objectives.

Fig. 1

Fig. 2

Fig. 3

Fig. 4

## RÉFÉRENCES CITÉES DANS LA DESCRIPTION

**Littérature non-brevet citée dans la description**

- **STEBUT et al.** Acoustic emission monitoring of single cracking events and associated damage mechanism analysis in indentation and scratch testing. *Surface and Coatings Technology,* 1999, vol. 116-119, 160-171